# EUROPEAN PATENT SPECIFICATION

(11) **EP 1 082 865 B1**
(45) Date of publication and mention of the grant of the patent: **05.08.2009**
(21) Application number: 99930070.0
(22) Date of filing: 02.06.1999
(51) Int. Cl.: H04W 4/00

(54) **DEVICE AND METHOD FOR UPDATING OF SERVICE LOGIC IN A MOBILE UNIT**
GERÄT UND VERFAHREN ZUR DIENSTLOGIKAKTUALISIERUNG IN EINEM MOBILGERÄT
DISPOSITIF ET PROCEDE POUR METTRE A JOUR LA LOGIQUE DE SERVICE DANS UNE UNITE MOBILE

(30) Priority: 05.06.1998 SE 9802004
(43) Date of publication of application: 14.03.2001
(73) Proprietor: TELIASONERA AB, 106 63 Stockholm (SE)
(72) Inventor: EMILSSON, Stellan, S-655 94 Karlstad (SE); BLOMKVIST, Hakan, S-654 59 Karlstad (SE); KAWE, Rolf, S-654 68 Karlstad (SE); ANDERSSON, Per, S-652 29 Karlstad (SE)
(74) Representative: Hopfgarten, Nils
(86) International application number: PCT/SE1999/000958
(87) International publication number: WO 1999/063767

(56) References cited:
- EP-A1- 0 562 890
- EP-A2- 0 869 691
- WO-A1-97/14258
- WO-A2-98/38820

## Description

### TECHNICAL FIELD

The present invention relates to a a cellular digital radio communications system including means for mobile or semi-stationary communication which utilises SAT-base information messages between transmitting and receiving equipment included in the system according to the pre-characterizing portion of claim 1. The system thus makes possible for a user of units within the system to load to a mobile unit a service data structure in the form of a general application to the SIM-and in the mobile unit and the service data structure can be converted, by utillisation of a service interpreter arranged on said SIM-card and co-operating with the service data structure, to a specific telecommunications and/or data service, so that a capacity efficient utilisation of the transmission qualities of the system is achieved.

### PRIOR ART

In cellular radio systems it is previously known to utillise technolgies including means where a complete implemendation of a telecommunications and/or data service is loaded to the mobile unit via the signalling channels of the system. The technologies, however, are typically very resource demanding with regard to, i.a. the time consumption for loading of information, respective the transmission capacity in the radio system. With below stated problems as a consequence.

It is not previously known to have, in a cellular radio communications system for mobile or semi-stationary communication which includes SAT-based message managing, the possibility to divide the information content into two separate logic parts, where a first part is arranged in the SIM-card of the mobile terminal, co-operating with the system and where means are included to convert the message content of the second part to a telecommunications and/or data service which can be executed by the mobile unit. Such a system is primarily aimed at improving the capacity utilisation in said system.

Document XP14015909 "Digital cellular telecommunications system (Phase 2+); Specification of the SIM Application Toolkit for the Subscriber Identity Module - Mobile Equipment (SIM - ME) interface (GSM 11.14 version 6.0.0 GSM Release 1997) describes the interface between the Subscriber Identity Module (SIM) and the Mobile Equipment (ME), and mandatory ME procedures, specifically for SIM Application Toolkit. The SIM Application Toolkit provides mechanisms which allow applications, existing in SIM, to interact and operate with any ME which supports the specific mechanisms required by the application. A plurality of mechanisms are defined, a.o. a menu selection mechanism for transfer of selected SIM application menu items to the SIM.

EP 0 562 890 describes a mobile communication network where the switching network transmits updating signals to the mobile equipment, altering data stored on the SIM card and thereby altering the operation on facilities available.

### DESCRIPTION OF THE INVENTION

### TECHNICAL PROBLEM

The telecommunications services of the future will require an ever increasing bandwidth. At the same time the need for terminal mobility will increase further in comparison with the mobility possibilities of today. Terminal mobility normally takes for granted that radio communication is utilised for transmission of information between two or more units included in the system. The available frequency range, however, is a limited resource, so the allocation of this resource will necessarily be limited for the new technologies which primarily are intended for relative capacity demanding applications or services. The limitation of the frequency spectrum consequently requires an extremely efficient use of it if it shall be possible to execute the new services within the frame of requested quality.

Mobile networks belong to the most signal intensive of all public networks. The signalling load will increase in the telecommunications networks by the introduction of new functions which are used for call managing. In the mobile networks, signalling loads which are caused by registration of the mobile unit, change of base station, authority checks, etc. will be added. In addition the signalling will be utilised for user data which are transmitted as short messages. Such short message traffic will strongly influence the signalling load in future networks as the short message services are expected to be very much utilised.

SAT (SIM Application Toolkit) is a new amendment to the GSM-standard which describes the communication interface between SIM-cards and the mobile unit. As a consequence of this new amendment to the GSM-standard, the mobile telephone manufacturers have no longer monopoly of implementing new services in the mobile unit, but it has via the new standard also opened up quite new possibilities for telecommunications operators to implement own functionality on the SIM-cards in the mobile units.

A SIM-card (Subscriber Identity Module), however, holds a limited amount of storing capacity regarding the memory which in reality only allows that a comparatively small number of applications can be stored on the card at the same time. One way of evading the problem of the limited storage capacity is to, via the radio system, load to the mobile unit a certain application which the user needs on a certain occasion. The problem is that such a procedure will take comparatively long time, of the order of minutes, to load new applications to the user's mobile unit, a fact which may make new services less attractive to the users. The invention aims at solving this problem.

When SATs which can be loaded and which are based on telecommunications and data services will be utilised to a great extent, this will result in that the transmitting channels of the radio communications system will be heavily loaded, which will cause a considerable problem for the general capacity utilisation of the system. The invention aims at solving also this problem.

### THE SOLUTION

The problem is solved by a system of the kind defined in the introductory portion of the description which has the features of the characterizing portion of claim 1.

The main characteristics of the invention are further stated in the following claims.

### ADVANTAGES

The previously known technologies for loading telecommunications and data applications utilise, in comparison with the present invention, large amounts of transmitting capacity at the transmission of information between the base station and the mobile unit, and great time consumption during which the call capacity of the radio system decreases. These previously known technologies, however, will not be sufficiently efficient for bandwidth demanding applications, especially not when the number of attractive services increases.

The chances for new broadband applications in cellular radio systems for that reason will increase considerably if one, by utilisation of the present invention, can optimise the transmission of signals at the loading of new services to the user's mobile unit.

Another advantage of the present invention is that the network operator is given a complete control of the implementation of SAT-based services, that he/she can build in wanted safety and fault management in the general application, and that the system in this way can be utilised in a more capacity efficient way.

One further advantage is that the invention can be implemented essentially in all cellular radio systems which utilise SAT-based messages between the network and the with the network co-operating mobile units.

### DESCRIPTION OF DRAWINGS

One at present suggested embodiment which shows the significant characteristics of the invention is described below with reference to enclosed drawings where,
Figure 1 shows the service logic in form of a tree structure.
Figure 2 shows in the system included components and how these co-operate.

### DETAILED EMBODIMENT

The present invention is above all applicable to such cellular radio communications systems for mobile communication which utilise SAT-based information messages including applications for telecommunications and data services.

An implementation of a SAT based service consists of an application on the SIM-card of the mobile unit which includes all data structures and program logic which is required to build up a menu structure by means of which a user can select and initiate different events he/she wants to perform by means of the mobile unit.

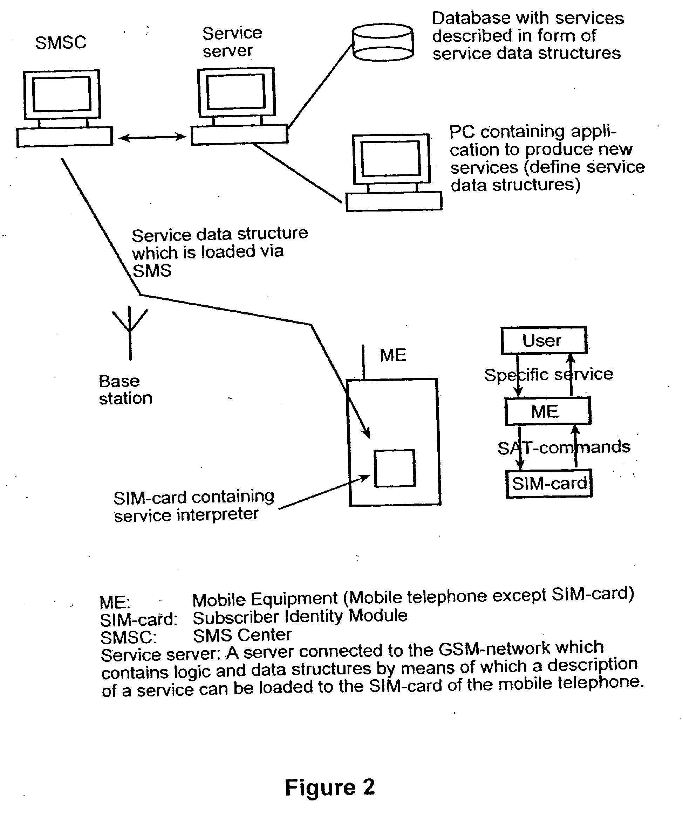

One application is based on that SAT-commands are transmitted in both directions between the SIM-card and the mobile unit. When a user makes a menu selection, a SAT-message is transmitted to the SIM-card where the application interprets the content of the message and after that transmits a new SAT-message to the mobile unit. By means of the SAT-message, menu structures can be defined, calls be established, SMS-messages be transmitted etc. See Figure 2.

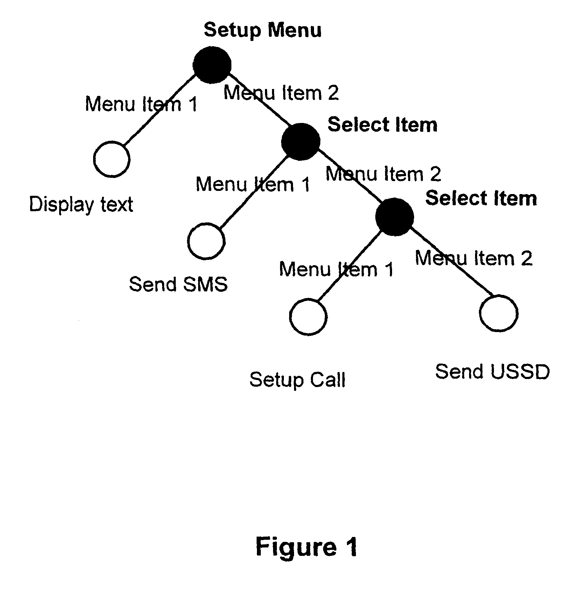

As example of a SAT-based service here a tree structure is described, see Figure 1, where the nodes of the tree symbolise SIMAT-commands and the "branches" between the nodes indicate different menu selections. The structure means that a user via a menu structure, which can be built up in several levels, finally will have selected what he/she wants to have executed. The SAT-command is divided into two categories, on one hand those which define the menu structure, see filled up circles in Figure 1, and on the other those which are executing something, see non-filled up circles in Figure 1. This description of a service here is called service logic, which can be translated into a well defined data format, here called the service data structure, which for instance can be transmitted as an SMS-message (Short Message Service) between the in the system included base stations and the mobile unit in question.

Thanks to that SAT-applications are strongly attached to transmit and receive well defined messages, and that a menu selection in its turn generates a new message, it is made possible to describe a specific service by means of utilising a service data structure which can be interpreted as a general application, here called service interpreter. By the division a service is loaded to a mobile terminal only in the form of a service data structure which results in that the transmitted amount of information can be heavily reduced, which in its turn contributes to a reduced load on the signal transmission channels of the radio communications system, and that the services can be loaded considerably faster than by utilisation of the technologies of today.

By the solution with a service data structure, the message content of which is interpreted by a service interpreter, a service is defined not in terms of source code or object code, but only by means of a service data structure. For the purpose of the service interpreter interpreting the service data structure, this is transmitted in the form of a well defined message via SMS- or Cell Broadcast technology to the on the SIM-card arranged service interpreter, see Figure 2.

The present embodiment is described on the basis of a perspective where telecommunications and data services are implemented on a GSM SIM-card which communicates with a mobile unit by means of utilising SAT-commands and where data storing for distribution of the service data structure is made via the previously known transmission technologies SMS or Cell Broadcast. The suggested solution, however, can also be applied to other systems, such as UMTS (Universal Mobile Telephone System).

The invention consequently is not limited to the as example described embodiment, but may in addition be subject to modifications within the frame of the following claims.

## Claims

1. A cellular digital radio communications system including means for mobile or semi-stationary communication which utilises SAT- based information messages between transmitting and receiving equipments included in said system, wherein a device belonging to a mobile unit of the cellular digital radio communications system includes means to interpret a service data structure containing a description of a telecommunications and/or data service, means to manage logic and data structures which are necessary to transmit and receive general SAT-commands, means arranged to assess the functionality and conformity of received data structures to preset information security demands, and means adapted to detect and manage faults in the received data structures, **characterized in that** SAT-based services are arranged in a tree structure, the nodes of which are representing the SAT-commands and the branches of which are representing menu selections, built in several layers, **in that** the SAT-commands are divided into one menu structure part and one executing part, and **in that** the SAT-command is arranged to be transmitted in both directions between the SIM-card and the mobile unit.

2. The system according to claim 1, **characterized in that** the system is arranged to transmit information over a common carrier wave including user unique codes, and **in that** the carrier wave is arranged for transmission of said information to one of said transmitting and receiving equipments.

3. The system according to claim 1, **characterized in that** the system is arranged to transmit information in time slots divided into time frames, and **in that** selected time frames are arranged for transmission of information to one of said transmitting and receiving equipment.

4. The system according to claim 1, **characterized in that** the system includes means for decompressing received compressed data structures.

5. The system according to any of the preceding claims, **characterized in that** said system is provided with one or more units for reception and transmission of information, which can be called from one mobile or stationary unit of the system.

6. The system according to any of the preceding claims, **characterized in that** base stations of the system are adapted to transmit the service data structure to the mobile units via SMS or Cell Broadcast.

7. The system according to any of the preceding claims, **characterized in that** the system is adapted to load one or more services in the system to one or more mobile units in the form of a service data structure.

## Patentansprüche

1. Zellulares digitales Funkkommunikationssystem, das Mittel für mobile oder halbstationäre Kommunikation einschließt, die auf SAT beruhende Informationsmeldungen zwischen sendenden und empfangenden Ausrüstungen verwendet, die in dem System eingeschlossen sind, wobei eine Einrichtung, die zu einer mobilen Einheit des zellularen digitalen Funkkommunikationssystems gehört, Mittel einschließt, eine Dienstdatenstruktur zu interpretieren, die eine Beschreibung eines Telekommunikations-und/oder Datendienstes, Mittel zum Verwalten von logischen und Datenstrukturen, die notwendig sind, allgemeine SAT-Anweisungen zu senden und zu empfangen, Mittel, die dazu ausgebildet sind, die Funktionalität und Konformität von empfangenden Datenstrukturen zu voreingestellten Informationssicherheitsanweisungen zu bewerten, und Mittel aufweist, die dazu ausgebildet sind, Fehler in den empfangenden Datenstrukturen zu delektieren und zu verwalten, **dadurch gekennzeichnet, dass** die auf SAT beruhenden Dienste in einer Baumstruktur angeordnet sind, deren Knoten die SAT-Anweisungen darstellen und deren Zweige Menü-Auswahlen darstellen, die in mehreren Schichten aufgebaut sind, dass die SAT-Anweisungen in einen Menüstrukturteil und einen ausführenden Teil aufgeteilt sind, und dass die SAT-Anweisung dazu ausgebildet ist, in beiden Richtungen zwischen der SIM-Karte und der mobilen Einheit übertragen zu werden.

2. System nach Anspruch 1, **dadurch gekennzeichnet, dass** das System dazu ausgebildet ist, Information über eine gemeinsame Trägerwelle einschließlich für den Benutzer einzigartiger Codes zu senden und dass die Trägerwelle für Übertragung der Information zu einer der sendenden und empfangenden Ausrüstungen ausgebindet

3. System nach Anspruch 1, **dadurch gekennzeichnet, dass** das System dazu ausgebildet ist, Information in Zeitschlitzen zu übertragen, die in Zeitrahmen aufgeteilt sind, und dass ausgewählte Zeitrahmen für Übertragung von Information zu einer der sendenden und empfangenden Ausrüstungen ausgebildet sind.

4. System nach Anspruch 1, **dadurch gekennzeichnet, dass** das System Mittel zum Dekomprimieren von empfangenden komprimierten Datenstrukturen einschließt.

5. System nach einem der vorangehenden Ansprüche, **dadurch gekennzeichnet, dass** das System mit einer oder mehreren Einherden für Empfang und Senden von Information versehen ist, die von einer mobilen oder stationären Einheit des Systems aufgerufen werden kann.

6. System nach einem der vorangehenden Ansprüche, **dadurch gekennzeichnen, dass** Basisstationen des Systems dazu ausgebildet sind, die Dienstdatenstruktur zu den mobilen Einheiten über SMS oder Zelienrundsendung zu übertragen.

7. System nach einem der vorangehenden Ansprüche, **dadurch gekennzeichnet, dass** das System dazu ausgebildet ist, einen oder mehrere Dienste in dem System zu einer oder mehreren mobilen Einheiten in Form einer Dienstdatenstruktur zu laden.

## Revendications

1. Système de communication radio numérique cellulaire comportant des moyens destinés à assurer une communication mobile ou semi-fixe qui utilise des messages d'information du type SAT entre des équipements d'émission et de réception contenus dans ledit système, dans lequel un dispositif appartenant à une unité mobile du système de communication radio numérique cellulaire comporte des moyens destinés à interpréter une structure numérique de service contenant une description d'un service de télécommunication et/ou numérique, des moyens de gestion de structures logique et numérique qui sont nécessaires afin d'émettre et recevoir des instructions SPAT générales, des moyens agencés de manière à déterminer les fonctionnalités et conformité des structures numériques reçues afin de présélectionner des demandes de sécurité d'information, et des moyens adaptés afin de détecter et de gérer des erreurs sur les structures numériques reçues, **caractérisé en ce que** les services du type Saut sont agencés en une structure arborescente, dont les noeuds représentent les instructions SPAT et dont les branches représentent des sélections de menu, construite en plusieurs couches, **en ce que** les instructions SPAT sont divisées en une partie de structure de menu et une partie d'exécution, et **en ce que** l'instruction SPAT est agencée de manière à être transmise dans les deux sens entre la carte SIM et l'unité mobile.

2. Système selon la revendication 1, **caractérisé en ce que** le système est agencé de manière à transmettre des informations sur une onde porteuse commune comportant des codes uniques d'utilisateur, et **en ce que** l'onde porteuse est agencée afin d'assurer la transmission desdites informations vers l'un desdits équipements démission et de réception.

3. Système selon la revendication 1, **caractérisé en ce que** le système est agencé de manière à transmettre des informations sur des plages temporelles divisées en trames temporelles, et **en ce que** les trames temporelles sélectionnées sont agencées afin d'assurer la transmission d'information vers l'un desdits équipements d'émission et de réception.

4. Système selon la revendication 1, **caractérisé en ce que** le système comporte des moyens de décompression des structures numériques compressées reçues.

5. Système selon l'une quelconque des revendications précédentes, **caractérisé en ce que** ledit système comporte une ou plusieurs unités de réception et d'émission d'information, qui peuvent être appelées à partir d'une unité mobile ou fixe du système.

6. Système selon l'une quelconque des revendications précédentes, **caractérisé en ce que** les stations de base du système sont adaptées afin de transmettre la structure numérique de service vers les unités mobiles par l'intermédiaire de SMS ou par diffusion cellulaire.

7. Système selon l'une quelconque des revendications précédentes, **caractérisé en ce que** le système est adapté de manière à charger un ou plusieurs services sur le système vers une ou plusieurs unités mobiles sous la forme d'une structure numérique de service.
